# EUROPEAN PATENT APPLICATION

(11) **EP 3 525 158 A1**
(43) Date of publication of application: **14.08.2019**
(21) Application number: 18186671.6
(22) Date of filing: 31.07.2018
(51) Int. Cl.: G06Q 30/08, G06Q 50/18, G06Q 20/06, G05D 1/00, G08G 1/00

(54) **METHODS, APPARATUSES AND COMPUTER PROGRAMS FOR A FIRST ROAD RESOURCE USER AND FOR A ROAD RESOURCE ALLOCATION ENTITY**

(30) Priority: 09.02.2018 EP 18156096
(71) Applicant: Volkswagen AG, 38440 Wolfsburg (DE); MAN Truck & Bus SE, 80995 München (DE); Scania CV AB, 151 87 Södertälje (SE)
(72) Inventor: Alieiev, Roman, 39576 Stendal (DE); Jornod, Guillaume, 10245 Berlin (DE); Hehn, Thorsten, 85055 Ingolstadt (DE); Buburuzan, Teodor, 38118 Braunschweig (DE); Cerwall, Joakim, 11352 Stockholm (SE); Zielinski, Ernst, 44803 Bochum (DE)
(74) Representative: 2SPL Patentanwälte PartG mbB

(57) **Abstract**

The present invention relates to methods, apparatuses and computer programs for a first road resource user and for a road resource allocation entity. The method for the first road resource user comprises reserving (120) a road resource by transmitting (122) a request for the road resource to a second road resource user (200) or to a road resource allocation entity (400), receiving (124) a grant for the road resource from the second road resource user (200) or from the road resource allocation entity (400), and storing (126) information related to the grant for the road resource within a storage unit associated with the first road resource user (100).

## Description

The present invention relates to methods, apparatuses and computer programs for a first road resource user and for a road resource allocation entity, more specifically, but not exclusively, to allocating a road resource to one or more road resource users.

A key transportation goal may be to provide an "optimal" way to reach the desired destination. The "optimality" might be represented in different ways such as finding the fastest, safest, most comfortable path, etc. One of the main challenges in finding the desired path may be the impact of other road resource users on the actual road state. The expected shortest path or the safest lane at the complex traffic situation may be changed to unacceptable within short time if other vehicles and road resource users come into play. Furthermore, different vehicles may have different driving preferences. For example, some vehicles, such as ambulances, may desire to reach their destination in the minimum amount of time, while other vehicles, such as trucks, may prefer to reduce a fuel consumption.

EP18156096 shows a method and a system for a cooperative operation of multiple vehicles, wherein a monetary incentive is offered from a first vehicle to a second vehicle to perform an action, e.g. to perform a driving maneuver or to provide data to the first vehicle. As the driving preferences of different vehicles vary, the momentary incentive offered by different vehicles may also vary, which may lead to coordinated driving efforts that take into account the driving preferences of the individual vehicles. In some cases, the monetary incentive might lead to situations, in which vehicles abuse the system by "hogging" road resources.

Research papers Laval et al.: "Real-time congestion pricing strategies for toll facilities", Gutman: "Dynamic Pricing for Toll Lanes - A Case Study" and Luo et al.: "Parametrized Dynamic Routing of a Fleet of Cybercars" deal with coordinated driving management strategies, in which a large number of vehicles are coordinated to achieve an improved traffic flow. As these strategies are concerned with the overall traffic flow, they do not take into account the driving preferences of the individual vehicles, nor do they safeguard against disadvantaging individual vehicles.

There may be a desire for providing an improved concept for coordinating road resource users, which strikes a balance between driving preferences of the road resource users.

Embodiments are based on the finding that a road comprises various road resources that can be used by road resource users, i.e. vehicles that drive on a road. A road resource may for example be a passage on a segment at a road at a time interval, it may be a parking spot, or it may be a priority of emergency vehicles in dense traffic. At least some of the road resources may be desired by more than one road resource user. To provide a fair balance in cooperative driving among the road participants, the road resource may be given to a road resource user that sets a high priority value for the road resource, e.g. a vehicle that urgently needs to reach a destination in time. To provide a counter balance, other road resource users allowing the road resource user to overtake may be compensated by the road resource user, so the next time they desire preference at a road resource, e.g. to maintain a fuel-efficient driving style, they can set a high priority value. This may strike a fair balance between situations, in which road participants let other road participants take preference, and other situations, in which the road participants take preference themselves. Additionally, the priority values may be chosen by the individual road resource users to reflect their driving preference.

At least some embodiments relate to a method for a first road resource user. The method comprises reserving a road resource by transmitting a request for the road resource to a second road resource user or to a road resource allocation entity, receiving a grant for the road resource from the second road resource user or from the road resource allocation entity, and storing information related to the grant for the road resource within a storage unit associated with the first road resource user. Storing the information related to the grant within a storage unit associated with the first road resource user may enable keeping a balance for road resources assigned to road resource users, in which none of the road resource users might be disadvantaged.

The method may further comprise determining a priority value of the first road resource user for the road resource. The request for the road resource may be based on the priority value of the first road resource user for the road resource. The priority value of the first road resource user for the road resource may indicate how valuable using the road resource is to the first road resource user. This may provide a comparative value if more than one road resource user wants to use the road resource or if the road resource can only be used if other road resource users accommodate for it.

In some embodiments, the method further comprises receiving information related to a (ego) priority value of the second road resource user or of the road resource allocation entity for the road resource from the second road resource user or from the road resource allocation entity. The priority value of the second road resource user or of the road resource allocation entity for the road resource may help the first road resource user to decide, whether to attempt to reserve the road resource.

The request for the road resource might be transmitted to the second road resource user or to the road resource allocation entity if the priority value of the first road resource user for the road resource is higher than the priority value currently associated with the road resource, e.g. the (ego) priority value of the second road resource user or of the road resource allocation entity for the road resource. To successfully reserve the road resource, the first road resource user might choose a priority value that is higher than the priority value of the second road resource user or of the road resource allocation entity for the road resource. The first road resource user might reserve the road resource (only) if the priority value of the first road resource user for the road resource is higher than the priority value of the second road resource user or of the road resource allocation entity for the road resource.

The grant for the road resource may be received from the second road resource user or from the road resource allocation entity if the priority value of the first road resource user for the road resource is higher than a (ego) priority value of the second road resource user or has been selected as the highest priority value by the road resource allocation entity for the road resource. This may provide a confirmation of a successful reservation of the road resource to the first road resource user.

In at least some embodiments, the storage unit associated with the first road resource user comprises a priority value reservoir. The priority value of the first road resource user for the road resource may be determined based on the priority value reservoir. The priority value of the first road resource user may be limited by the priority value reservoir. For example, the priority value reservoir may grow, if a reservation is transferred from the first road resource user to a third road resource user, and it may decrease, if a road resource is reserved for the first road resource user. Thus, the priority value reservoir may reflect the priority values spent on previous reservations and received for a transfer of at least some of said reservations.

The first road resource user may further reserve the road resource by asserting the road resource if the road resource is previously unreserved, e.g. if no other road resource user has previously reserved the road resource and if the road resource is not associated with a road resource allocation entity. For example, the asserting of the road resource may comprise declaring, that the road resource is reserved for the road resource user. This may enable reserving the road resource if the road resource is previously unreserved.

In some embodiments, the reservation for the road resource may be transferred to another (e.g. a third) road resource user. The method may further comprise transferring the reservation for the road resource to a third road resource user by receiving a further request for the road resource from the third road resource user, granting the further request for the road resource based on the further request for the road resource, and storing information related to the further request within the storage unit associated with the first road resource user. This may enable a dynamic exchange of reservations for road resources, which may adapt to a current traffic situation.

In at least some embodiments, the further request for the road resource comprises information related to a priority value of the third road resource user for the road resource, wherein the further request is granted if the priority value of the third road resource user for the road resource is higher than a priority value of the first road resource user for the road resource. As a result, the reservation for the road resource may be transferred to the third road resource user if the third road resource user values the road resource more than the first road resource user does.

This may be reflected by the priority value reservoir. The storing of the information related to the further request may comprise transferring the priority value of the third road resource user for the road resource from the third road resource user to the priority value reservoir. The storing of the information related to the further request may comprise adding the priority value of the third road resource user for the road resource to the priority value reservoir. This may enable the first road resource user to set a higher priority value in the future.

For example, the road resource may comprise at least one element of the group of a passage on a segment of a road at a time interval, a passage on a segment of a fast lane at a time interval, an extended amount of space on a road, an extended amount of time for passing a traffic light, a priority in traffic, a usage of a parking spot at a time interval and a consent to overtake. The method may be used in various road situations to find a balance for road resources assigned to road resource users.

In some examples, the priority value of the first road resource user for the road resource may be determined based on the priority value currently associated with the road resource, e.g. the priority value of the second road resource user or of the road resource allocation entity for the road resource. This may facilitate a negotiation between road resource users and or between the first road resource user and the road resource allocation entity, which may be managed by a road resource allocation function.

Embodiments further provide a method for a road resource allocation entity. The method comprises receiving a request for a road resource from a road resource user. The method further comprises determining a priority value of the road resource allocation entity for the road resource. The method further comprises granting the request for the road resource, if a priority value of the road resource user for the road resource is higher than the priority value of the road resource allocation entity for the road resource. The method further comprises storing information related to the grant for the road resource within a storage unit associated with the road resource allocation entity. This may enable granting the road resource to a road resource user based on a time-variant priority value of the road infrastructure. For example, the road resource allocation entity may determine its priority value based on a variety of factors, which may be used to control and improve a flow of traffic.

Embodiments further provide a computer program having a program code for performing at least one of the methods, when the computer program is executed on a computer, a processor, or a programmable hardware component.

Embodiments further provide an apparatus for a first road resource user. The apparatus comprises at least one interface for communicating with further road resource users and/or with road resource allocation entities. The apparatus comprises a control module configured to reserve a road resource by transmitting a request for the road resource to a second road resource user or to a road resource allocation entity, receiving a grant for the road resource from the second road resource user or from the road resource allocation entity, and storing information related to the grant for the road resource within a storage unit associated with the first road resource user. Storing the information related to the grant within a storage unit associated with the road resource user may enable keeping a balance for road resources assigned to road resource users, in which none of the road resource users might be disadvantaged.

Embodiments further provide an apparatus for a road resource allocation entity. The apparatus comprises at least one interface for communicating with a road resource user. The apparatus further comprises a control module configured to receive a request for a road resource from the road resource user. The request for the road resource is based on a priority value of the road resource user for the road resource. The control module is configured to determine a priority value of the road resource allocation entity for the road resource. The control module is configured to grant the request for the road resource, if the priority value of the road resource user for the road resource is higher than the priority value of the road resource allocation entity for the road resource. The control module is configured to store information related to the grant for the road resource within a storage unit associated with the road resource allocation entity. This may enable granting the road resource to a road resource user based on a time-variant priority value of the road infrastructure. For example, the road resource allocation entity may determine its priority value based on a variety of factors, which may be used to control and improve a flow of traffic.

Some other features or aspects will be described using the following non-limiting embodiments of apparatuses or methods or computer programs or computer program products by way of example only, and with reference to the accompanying figures, in which:
Fig. 1 a shows a flow chart of an embodiment of a method for a road resource user;
Fig. 1b shows a more detailed flow chart of an embodiment of a method for a road resource user;
Fig. 1c shows a block diagram of an embodiment of an apparatus for a road resource user;
Fig. 2a shows a flow chart of an embodiment of a method for a road resource allocation entity; and
Fig. 2b shows a block diagram of an embodiment of an apparatus for a road resource allocation entity.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

At least some embodiments are based on the finding that a road comprises various road resources that can be used by road resource users. A road resource may be defined as the capability to use a road element such as a road segment, a parking spot, a road lane, a road intersection etc. under certain condition at a certain time. It means that the resource is spatially and temporally located. The conditions can be a time duration, a velocity, an acceleration, an area, a volume etc. At least some of the road resources may be desired by more than one road resource user.

Moreover, the use of certain road resources may be exclusively assigned to a single road resource user or may be shared among road resource users with the defined rules and rights among users of the shared resources. An example of shared use of road resources could be finding an optimal distance between vehicles in the parking lot, which is a section of the road not directly used by neither of vehicles but could be important to enable comfortable leaving parking area maneuver sometime in the future. Similarly, finding the optimal common traffic flow speed on the road could be another example of using shared road resources. In the latter case, one vehicle (road resource user) could put higher value on the preferred common flow speed and shift the common flow speed closer to the desired value.

To provide a fair balance in cooperative driving and overall road resource utilization among the road resource users, the road resource allocation mechanism may be used. The resource allocation mechanism may comprise a set of pre-defined constraints and instant (real-time) road resource requests. It may be a function which selects the request for resources (for an exclusive or shared use) among all inquiries, which has the highest offered priority value for using the resources given available constraints. The resource allocation function then may be repeated again if any new request for the same road resources has been proposed. The resource evaluation may be either event based or conducted over periodic intervals. If the resource request event occurs or if the time interval expires, the algorithm of finding the request with the highest proposed value may be repeated again.

Every time after the resource allocation function selected the new offered priority value for the certain resources (which exceeds the currently assigned priority value), the cost (e.g. an amount of tokens) of using the requested resource may be increased and the current resource user might either increase its original offer to exceed the newly assign value or the resources will be given to a road resource user that sets a higher priority value for the road resource. For the case when the road resources belong to some infrastructure owner, the cost of using road resources over time and space may be "paid" to the infrastructure owner. For the toll-free roads, the positive difference in the value between the earlier and the newly assigned values may be transferred to the road resource user with the previously assigned resource value. Such an approach would avoid the problem of resource manipulation -- if resources are in demand, the current resource user must either vacate them or increase expenses for using them.

As an example of this process could be a vehicle that urgently needs to reach a destination in time. If the new user has been selected for the use of road resources, a timely confirmation about the user change (ability of the earlier user to vacate the resources in time) may be provided from the previous user to the new user and to other involved road participants. In case if no confirmation or if it is not possible to vacate the resources in time, the newly assigned value as well as an additional penalty may be applied to the previous road resource user and the resources may be further kept with the earlier resource user. The information about unsuccessful road resource user change may then be explicitly sent to all involved road participants.

Finally, if the new owner (road resource user) of the road resource has been successfully selected, an update about it may be sent to all other road resource users which were involved in the resource selection process. Moreover, the maximum time allowed to receive the acknowledgment from the earlier road resource user may be scenario and application dependent.

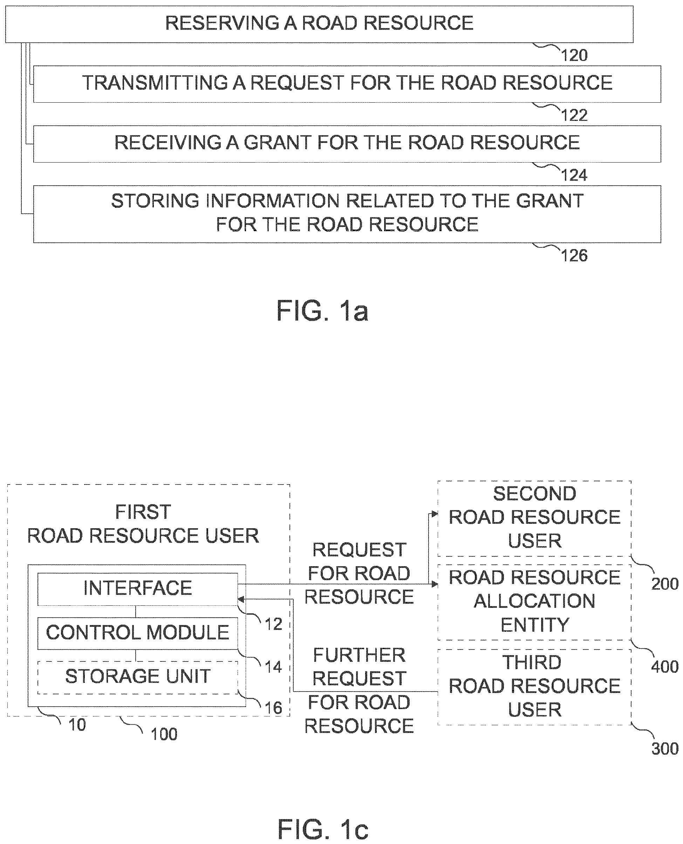

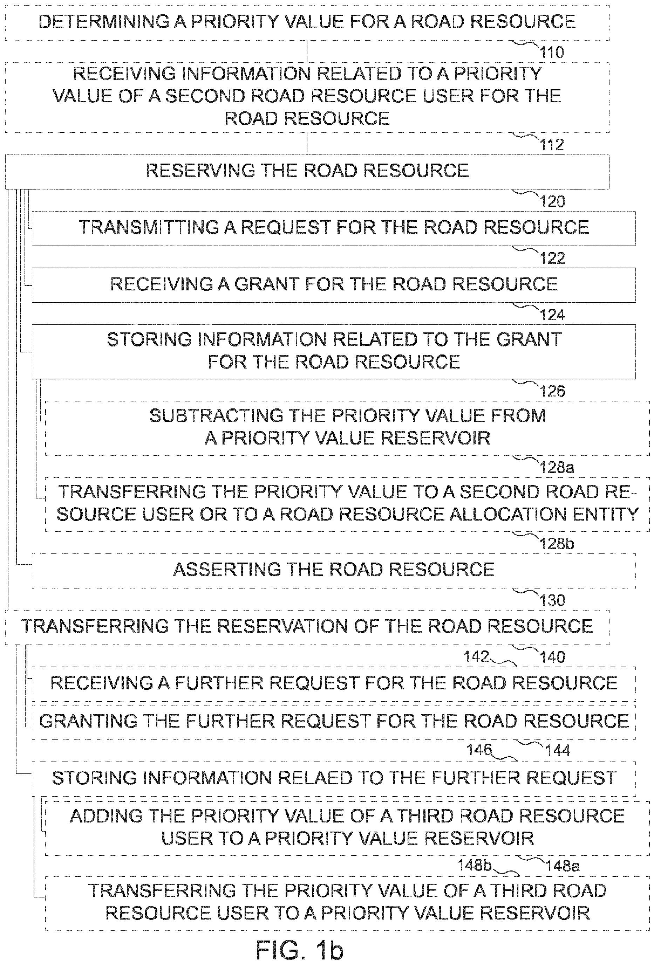

Figs. 1 a and 1b show flow charts of embodiments of a method for a first road resource user 100. The method comprises reserving 120 a road resource. The road resource is reserved by transmitting 122 a request for the road resource to a second road resource user 200 or to a road resource allocation entity 400 (which may be centralized or distributed), receiving 124 a grant for the road resource from the second road resource user 200 or from the road resource allocation entity 400, and storing 126 information related to the grant for the road resource within a storage unit associated with the first road resource user 100, e.g. if the road resource is previously reserved (or associated with a road resource allocation entity 400).

Fig. 1c shows a block diagram of an embodiment of a corresponding apparatus 10 for a first road resource user. The apparatus 10 comprises at least one interface 12 for communicating with further road resource users and/or with road resource allocation entities (e.g. with the second road resource user 200, a third road resource user 300 and/or the road resource allocation entity 400). The control module 14 is configured to reserve a road resource. The control module 14 is configured to reserve the road resource by transmitting a request for the road resource to a second road resource user 200 or to a road resource allocation entity 400, receiving a grant for the road resource from the second road resource user 200 or from the road resource allocation entity 400, and storing information related to the grant for the road resource within a storage 16 unit associated with the first road resource user 100, e.g. if the road resource is previously reserved (or associated with a road resource allocation entity 400). If not specified otherwise, the control module 14 may be configured to perform the method of Figs. 1a and 1b, e.g. in conjunction with the at least one interface 12. In at least some embodiments, as further shown in Fig. 1c, the apparatus 10 may further comprise the storage unit 16. Fig. 1c further shows the first road resource user 100 comprising the apparatus 10.

The following description relates to both the method of Figs. 1a and 1b and the apparatus 10 of Fig. 1c.

In at least some embodiments, the first road resource user 100 (and/or the second road resource user 200, the third road resource user 300) may be an entity that uses a road, e.g. a vehicle or a pedestrian. In other words, a road resource user may be a road participant. For example, if the pedestrian is the first road resource user 100, or if the vehicle is incapable of performing the method, the method may be performed by a mobile device of the pedestrian or of a driver of the vehicle. For example, the vehicle may be a land vehicle, a road vehicle, a car, an automobile, a motorbike, an autonomous vehicle, a semi-autonomous vehicle, a remote-controlled vehicle, a vehicle in cooperative driving mode, an off-road vehicle, a motor vehicle, a truck or a lorry.

In embodiments, the road resource may be or comprise at least one element of the group of a passage on a segment of a road at a time interval, a passage on a segment of a fast lane at a time interval, an extended amount of space on a road, an extended amount of time for passing a traffic light, a priority in traffic, a usage of a parking spot at a time interval and a consent to overtake. In some embodiments, a road resource may be assigned exclusively to a road resource user. Alternatively, a road resource may be shared among two or more road resources users, e.g. only a part of the road resource may be assigned to a road resource user. For example, a road resource may be reserved. The reservation for a road reserve may be obtained by a road resource user (e.g. the first road resource user 100) from a road resource allocation entity (e.g. the road resource allocation entity 400), from a further road resource user (e.g. the second road resource user 200) or may be asserted (e.g. claimed) by the first road resource user. For example, each road resource might be granted (only) for a time interval. In at least some embodiments, a road resource user might be required to repeat reserving the road resource after the time interval expires, e.g. to repeat transferring an amount of tokens.

The method comprises reserving 120 the road resource. If the road resource is previously reserved (or associated with a road resource allocation entity 400), the road resource may be reserved as detailed above. If the road resource is previously unreserved (and not associated with a road resource allocation entity), the first road resource user 100 may reserve 120 the road resource by asserting 130 the road resource.

In at least some embodiments, a road resource is either associated with a road resource allocation entity or not associated with a road resource allocation entity. A road resource may be associated with a road resource allocation entity, if a road resource allocation entity at least initially grants a reservation for the road resource. For example, a toll road may be associated with a tollbooth. The tollboth may be the road resource allocation entity. The tollbooth may grant a reservation to a road resource of the toll road to road resource users. In this case, for example, the road resource may be a passage of the first road resource user on a segment of the toll road (e.g. a pre-determined length of a lane of the toll road) at a time interval. In some embodiments, the first road resource user may transfer the reserved road resource to a further road resource user, e.g. the third road resource user 300. Other road resources might not be associated with a road resource allocation entity. For example, on an open road, or at a crossroads, the road resource might be (initially) reserved 120 by asserting 130 the road resource. In at least some embodiments, the road resource allocation entity may be centralized or decentralized. For example, the road resource allocation entity may be a road infrastructure entity.

In various embodiments, asserting 130 the road resource may comprise transmitting a survey signal related to the road resource to road resource users and/or road resource allocation entities in a vicinity of the first road resource user 100. If the road resource is previously reserved, a road resource user in the vicinity of the first road resource user 100 may respond with an indication, that the road resource is (already) reserved. If the road resource is associated with a road resource allocation entity, the road resource allocation entity may respond with an indication, that the road resource is associated with the road resource allocation entity. Alternatively, the first road resource user in the vicinity of the first road resource user 100 may periodically broadcast the indication, that the road resource is (already) reserved, and/or the road resource allocation entity may periodically broadcast the indication, that the road resource is associated with the road resource allocation entity. The method may comprise receiving the indication, that the road resource is (already) reserved or the indication, that the road resource is associated with the road resource allocation entity. If no indication, that the road resource is (already) reserved or no indication, that the road resource is associated with the road resource allocation entity is received by the first road resource user 100, the asserting 130 of the road resource may comprise declaring, that the road resource is reserved for the first road resource user. The first road resource user 100 may further proclaim that the road resource is reserved by the first road resource user 100. For example, the method may further comprise broadcasting an indication, that the road resource is (already) reserved (by the first road resource user 100). Alternatively, the method may further comprise responding with the indication that the road resource is already reserved, if a survey signal related to the road resource is received.

In various embodiments, the second road resource user 200 (and/or the third road resource user 300) may be implemented similar to the first road resource user 100. The second road resource user may e.g. be a further vehicle or a further pedestrian. The second road resource user 200 may share a road with the first road resource user 100. The second road resource user 200 may be the current (or previous) "owner" of the reservation for the road resource, e.g. the road resource may be currently (or previously) reserved to the second road resource user 200. The road resource allocation entity 400 may be an entity that (at least initially) grants a reservation with the road resource. The road resource allocation entity 400 may be associated with the road resource. The road resource allocation entity may e.g. be one of a traffic management system, a tollbooth, a parking management system, a crossroads coordination system or a traffic flow control system. In at least some examples, the road resource allocation entity may be located in a vicinity of the road resource.

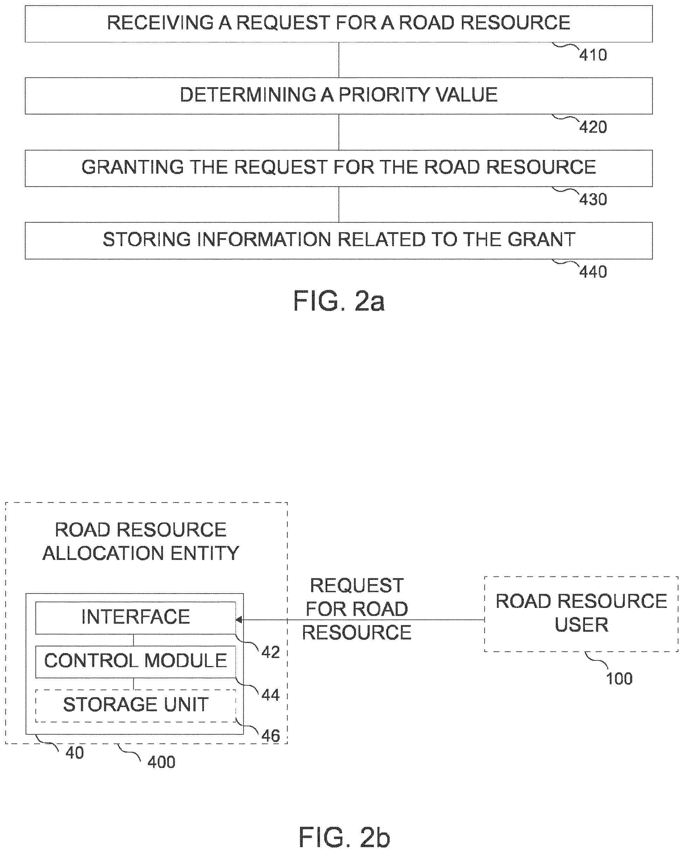

In various examples, the first road resource user 100, the first road resource user 200 and/or the road resource allocation entity 400 may communicate using one of vehicle-to-vehicle communication (V2V), vehicle-to-infrastructure communication (V2I), vehicle-to-X communication (V2X), cellular vehicle-to-vehicle communication (C-V2V), cellular vehicle-to-infrastructure communication (C-V2I) and cellular vehicle-to-X communication (C-V2X) (or one of car-to-car communication (C2C), car-to-infrastructure communication (C2I), car-to-X communication (C2X), cellular car-to-car communication (C-C2C), cellular car-to-infrastructure communication (C-C2I) and cellular car-to-X communication (C-C2X)). Vehicle-to-X communication (or car-to-X communication) may denote either vehicle-to-vehicle communication (or car-to-car communication) or vehicle-to-infrastructure communication (or car-to-infrastructure communication. The first road resource user 100, the first road resource user 200 and/or the road resource allocation entity 400 may communicate based on a vehicular communication protocol, e.g. based on a direct vehicular communication protocol or based on a cellular vehicular communication protocol. The first road resource user 100, the first road resource user 200 and/or the road resource allocation entity 400 may communicate either directly (without using a base station), e.g. using one of V2V, V2I, V2X, C2C, C2I, C2X, or via a base station, e.g. using C-V2V, C-V2I, C-V2X, C-C2C, C-C2I, C-V2X. For example, the (direct) vehicular communication protocol may be based on Institute of Electrical and Electronics Engineers standard 802.11p. The at least one interface 12 (and/or at least one interface 42 of Fig. 2b) may correspond to one or more inputs and/or outputs for receiving and/or transmitting information, which may be in digital (bit) values according to a specified code, within a module, between modules or between modules of different entities. The at least one interface 12; 42 may be configured to communicate via the (direct or cellular) vehicular communication network and/or via the cellular mobile communication system. The cellular vehicular communication protocol may be based on a cellular mobile communication system. In general, the cellular mobile communication system may, for example, correspond to one of the Third Generation Partnership Project (3GPP)-standardized mobile communication networks, where the term (cellular) mobile communication system is used synonymously to mobile communication network. The (cellular) mobile or wireless communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In at least some embodiments, the request for the road resource transmitted by the first road resource user 100 may be a reservation request for the road resource. The request for the road resource may indicate that the first road resource user 100 wishes or intends to reserve the road resource. The request for the road resource may comprise information related to an identity of the first road resource user 100. In at least some embodiments, the request for the road resource may indicate or comprise a priority value of the first road resource user 100 for the road resource. The request for the road resource may comprise information related to the priority value of the first road resource user 100 for the road resource.

In various embodiments, the receiving 124 of the grant for the road resource from the second road resource user 200 or from the road resource allocation entity 400 may comprise receiving an indication from the second road resource user 200 or from the road resource allocation entity 400, that the reservation for the road resource for the first road resource user 100 is/was successful. For example, the receiving 124 of the grant for the road resource may comprise receiving a cryptographic secret associated with the road resource. Alternatively, receiving 124 the grant for the road resource may comprise receiving a broadcast of the second road resource user 200 or of the road resource allocation entity 400 that the road resource is reserved by the first road resource user 100. For example, the grant for the road resource may be based on a blockchain data structure. Here, the term "blockchain" may be used for any distributed-ledger information storing approach. The receiving 124 of the grant for the road resource may comprise receiving at least a part of the blockchain data structure comprising information related to the reservation for the first road resource user 100 for the road structure. The grant for the road resource may be cryptographically linked to the blockchain data structure. The blockchain data structure may be or comprise a continuously growing list of records (e.g. records related to grants) which are linked and secured using cryptography.

For example, the first road resource user 100 may comprise and/or carry the storage unit. For example, the storage unit (e.g. the storage unit 16) may be a (persistent) memory unit, e.g. a flash memory. The information related to the grant for the road resource may be stored locally at the first road resource user 100. Alternatively, the storage unit may be provided and/or managed by a central entity. In this case, the storing of the information related to the grant may comprise transmitting the information related to the grant to the central entity. Alternatively, the central entity may receive the information related to the grant from the second road resource user 200 or from the road resource allocation entity 400, and the storing 126 may comprise receiving an acknowledgement for the storing of the information related to the grant by the central entity. In at least some embodiments, the information related to the grant for the road resource may document the reservation for the road resource for the first road resource user 100. In at least some examples, the information related to the grant for the road resource may comprise information related to a priority value of the first road resource user 100 for the road resource. For example, a priority value (e.g. the priority value of the first road resource user 100 for the road resource, the priority value of the second road resource user 200 for the road resource, the priority value of the road resource allocation entity 400 for the road resource and/or the priority value of the third road resource user 300 for the road resource) may be represented by an amount of tokens. The information related to the grant may indicate the amount of tokens the first road resource user 100 has spent for reserving the road resource. The amount of tokens may be subtracted from a priority value reservoir comprised by the storage unit. For example, if the transmitted 122 request for the road resource comprises information related to the priority value (corresponding to the amount of tokens), the received 124 grant for the road resource may indicate, that the amount of tokens corresponding to the priority value is to be transferred (or has been transferred) to the second road resource user 200 or to the road resource allocation entity 400, and the amount of tokens may be subtracted from the priority value reservoir to store 126 the information related to the grant. In a basic example, the information related to the grant may correspond to the priority value or to the amount of tokens.

In various embodiments, the method further comprises determining 110 the priority value of the first road resource user 100 for the road resource. The priority value of the first road resource user for the road resource may indicate how valuable using the road resource is to the first road resource user 100. For example, the determining 110 of the priority value may be based on one or more priorities of the first road resource user 100. The one or more priorities may e.g. comprise at least one of a fuel consumption of the first road resource user 100, a travel time of the first road resource user 100, an inclination to perform driving maneuvers of the first road resource user 100, an amount of space required or desired by the first road resource user 100, a destination of the first road resource user 100 and a driving capability of the first road resource user 100. The request for the road resource may be based on the priority value of the first road resource user 100 for the road resource. For example, the request for the road resource may comprise the priority value of the first road resource user 100 for the road resource or information related to the priority value of the first road resource user 100 for the road resource. For example, the priority value of the first road resource user 100 for the road resource may be represented by tokens. An amount of tokens may correspond to the priority value of the first road resource user 100 for the road resource. The tokens may be exchanged (e.g.) between road resource users and/or road resource allocation entities. The tokens may be stored within a priority value reservoir of the storage unit.

For example, the storage unit associated with the first road resource user 100 may comprise a priority value reservoir. The priority value of the first road resource user 100 for the road resource may be determined 110 based on the priority value reservoir. For example, the priority value reservoir of the first road resource user 100 may be a limit for the priority value the first road resource user 100 may determine. For example, if the priority value reservoir is empty or low, no or a low priority value may be set. In at least some embodiments, the priority value reservoir may comprise a finite amount of tokens. If the first road resource user reserves a road resource, an amount of tokens corresponding to the priority value of the first road resource user 100 for the road resource may be subtracted from the priority value reservoir. For example, the storing 126 of the information related to the grant for the road resource may comprise subtracting 128a the priority value (e.g. the amount of tokens corresponding to the priority value) of the first road resource user 100 for the road resource from the priority value reservoir. The method further may comprise transferring 128b the priority value (e.g. the amount of tokens corresponding to the priority value) of the first road resource user 100 for the road resource to the second road resource user 200 or to the road resource allocation entity 400. If the first road resource user transfers reservation for the road resource to a third road resource user, a further amount of tokens corresponding to the priority value of the third road resource user 100 for the road resource may be added to the priority value reservoir. In at least some embodiments, the priority value of the first road resource user 100 may be limited by the priority value reservoir. For example, the first road resource user 100 might be able to set the priority value only as high, as the finite amount of tokens of the priority value reservoir associated with the first road resource user 100 might allow. In at least some embodiments, the total amount of tokens may be limited. The limit on available resources can be defined for each road resource (e.g. road segment) by the infrastructure owner or can be mapped from some other available limited resources. Road resource users may trade the (available) tokens to trade reservation for the road resources. The volume of such reservoir may be either predefined and limited or may be flexible and depend on the relation between its volume and some other parameters, such as price per reservoir's volume.

In at least some embodiments, the grant for the road resource may be received 124 from the second road resource user 200 or from the road resource allocation entity 400 if the priority value of the first road resource user 100 for the road resource is higher than a priority value of the second road resource user 200 or has been selected as the highest priority value (e.g. among one or more reservation requests for the road resource) by the road resource allocation entity 400 for the road resource. In other words, the second road resource user 200 or the road resource allocation entity 400 may grant the (reservation) request by the first road resource user 100 for the road resource if the priority value of the first road resource user 100 for the road resource is higher than a priority value of the second road resource user 200 or if no other road resource user has indicated a higher priority value to the road resource allocation entity 400 for the road resource. The second road resource user 200 or the road resource allocation entity 400 may grant the (reservation) request by the first road resource user 100 for the road resource if the priority value of the first road resource user 100 indicates, that it is more valuable to the first road resource user 100 to use the road resource than to the second road resource user 200,that is more valuable to the first road resource user 100 to use the road resource than it is to the road resource allocation entity 400 to leave the road resource unreserved, or that the priority value of the first road resource user 100 is higher than a priority value of other road resource users for the road resource. The grant for the road resource may be received 124 from the second road resource user 200 or from the road resource allocation entity 400 if the priority value of the first road resource user 100 indicates, that it is more valuable to the first road resource user 100 to use the road resource than to the second road resource user 200, that is more valuable to the first road resource user 100 to use the road resource than it is to the road resource allocation entity 400 to leave the road resource unreserved, or if the priority value of the first road resource user 100 is higher than a priority value of other road resource users for the road resource.

In at least some embodiments, as further shown in Fig. 1b, the method further may comprise receiving 112 information related to a priority value of the second road resource user 200 or of the road resource allocation entity 400 for the road resource from the second road resource user 200 or from the road resource allocation entity 400. For example, the priority value of the second road resource user 200 may be an ego priority value of the second road resource user for the road resource, e.g. a priority value the second road resource user 200 places on using the road resource. For example, information related to a priority value of the second road resource user 200 or of the road resource allocation entity 400 for the road resource may be broadcast periodically by the second road resource user 200 or by the road resource allocation entity 400. Alternatively, the information related to a priority value of the second road resource user 200 or of the road resource allocation entity 400 for the road resource may be received in response to the request for the transmitted 122 request for the road resource. In at least some embodiments, the method may comprise negotiating the reservation for the road resource for the first road resource user 100 based on the transmitted 122 request for the road resource and based on the information related to a priority value of the second road resource user 200 or of the road resource allocation entity 400 for the road resource. For example, the request for the road resource may be transmitted 122 to the second road resource user 200 or to the road resource allocation entity 400 if the priority value of the first road resource user 100 for the road resource is higher than the priority value currently associated with the road resource, e.g. the priority value of the second road resource user 200 or of the road resource allocation entity 400 for the road resource. The first road resource user 100 may refrain from transmitting the request for the road resource if the priority value currently associated with the road resource is higher than the priority value of the first road resource user 100 for the road resource. For example, the request may be sent before the priority value of all participants willing to get this resource has been compared. So at this point it might not be known if the priority value is higher than the value of others but it should be higher than the currently assigned value for the given resource. Alternatively or additionally, the priority value of the first road resource user 100 for the road resource may be determined 110 based on the priority value currently associated with the road resource, e.g. based on the priority value of the second road resource user 200 or of the road resource allocation entity 400 for the road resource. If the priority value currently associated with the road resource, e.g. the priority value of the second road resource user 200 or of the road resource allocation entity 400 for the road resource is known to the first road resource user 100, the first road resource user 100 may determine the priority value of the first road resource user 100 for the road resource based on the priority value currently associated with the road resource, e.g. based on the priority value of the second road resource user 200 or of the road resource allocation entity 400 for the road resource, e.g. such that the priority value of the first road resource user 100 for the road resource (just) surpasses the priority value currently associated with the road resource, e.g. the priority value of the second road resource user 200 or of the road resource allocation entity 400 for the road resource.

In at least some examples, as further shown in Fig. 1b, the method further comprises transferring 140 the reservation for the road resource to a third road resource user 300. The transferring 140 of the reservation for the road resource may comprise receiving 142 a further (reservation) request for the road resource from the third road resource user 300. The further request for the road resource may be implemented similar to the request for the road resource. For example, the third road resource user 300 may perform the method, and the further request for the road resource may correspond to the request for the road resource as transmitted 122 by the third road resource user 300. In at least some examples, the further request for the road resource may be received 142 in response to the broadcasted indication, that the road resource is (already) reserved by the first road resource user 100.

The transferring 140 of the reservation for the road resource may further comprise granting 144 the further request for the road resource based on the further request for the road resource. For example, the further request for the road resource may comprise information related to a priority value of the third road resource user 300 for the road resource. The further request may be granted 144 if the priority value of the third road resource user 300 for the road resource is higher than a priority value of the first road resource user 100 for the road resource. The first road resource user 100 may grant the further (reservation) request by the first road resource user 100 for the road resource if the priority value of the third road resource user 300 indicates that it is more valuable to the third road resource user 300 to use the road resource than to the first road resource user 100. If the priority value of the third road resource user 300 for the road resource is lower than a priority value of the first road resource user 100 for the road resource and higher than the priority value of the second road resource user 200 or of the road resource allocation entity 400, the first road resource user 100 might transfer an amount of tokens representing the difference between the priority value of the third road resource user 300 and the priority value of the second road resource user 200 or of the road resource allocation entity 400 to the second road resource user 200 or to the road resource allocation entity 400 (e.g. to the previous owner of the road resource). For example, every new request that exceeds the previous priority value might not be ignored and the amount of tokens corresponding to the priority value may be increased with each new request which has higher value - if the first road resource user wants to keep the road resource assigned/reserved, the currently assigned resource user might be required to always offer the highest price. In case if there is no road resource allocation agency to collect the tokens, the latest resource owner may transfer the delta in priority value from the previous priority value to the previous resource owner. This eliminates the problem of setting a very high value/price and not using already assigned resources.

The transferring 140 of the reservation for the road resource may further comprise storing 146 information related to the further request within the storage unit associated with the first road resource user 100. For example, the information related to the grant for the road resource may document the reservation for the road resource for the third road resource user 300. In at least some examples, the information related to the further request may comprise information related to a priority value of the third road resource user 300 for the road resource. The information related to the further request may indicate the amount of tokens the third road resource user 300 has spent for reserving the road resource. The amount of tokens may be added to the priority value reservoir comprised by the storage unit. For example, the storing 146 of the information related to the further request may comprise adding 148a the priority value of the third road resource user 300 for the road resource to the priority value reservoir. Additionally or alternatively, the storing 146 of the information related to the further request may comprise transferring 148b the priority value of the third road resource user 300 for the road resource from the third road resource user 300 to the priority value reservoir. In case the storage unit is managed by a central entity, the storing 146 of the information related to the further request may comprise receiving an acknowledgement for the storing of the information related to the further request by the central entity.

In at least some embodiments, a priority value (e.g. the priority value of the first road resource user 100 for the road resource, the (ego) priority value of the second road resource user 200 for the road resource, the priority value of the road resource allocation entity 400 for the road resource and/or the priority value of the third road resource user 300 for the road resource) may change over time, e.g. be time-variant. For example, if the road resource comprises a passage of a road resource user on a segment of a road at a time interval, the priority value of the first road resource user for the road resource may rise based on a distance of the first road resource user to the road segment and/or based on a time distance to the time interval. In at least some embodiments, a priority value may also be based on available alternatives: If alternatives are available, that are similar to the road resource, a priority value of a road resource user may be lower than if no or unfavorable alternatives are available.

In embodiments, the control module 14 (and/or a control module 44 of Fig. 2b) may be implemented using one or more processing units, one or more processing devices, any means for processing, such as a processor, a computer or a programmable hardware component being operable with accordingly adapted software. In other words, the described function of the control module 14; 44 may as well be implemented in software, which is then executed on one or more programmable hardware components. Such hardware components may comprise a general purpose processor, a Digital Signal Processor (DSP), a micro-controller, etc.

More details and aspects of the method and/or the apparatus 10 are mentioned in connection with the proposed concept or one or more examples described above or below (e.g. Fig. 2a to 2b). The method and/or the apparatus 10 may comprise one or more additional optional features corresponding to one or more aspects of the proposed concept or one or more examples described above or below.

Fig. 2a shows a flow chart of an embodiment of a method for a road resource allocation entity 400. The method comprises receiving 410 a request for a road resource from a road resource user 100 (e.g. the first resource user 100 introduced in connection with Figs. 1a to 1c). The request for the road resource is based on a priority value of the road resource user 100 for the road resource. The method further comprises determining 420 a priority value of the road resource allocation entity 400 for the road resource. The method further comprises granting 430 the request for the road resource, if the priority value of the road resource user 100 for the road resource is higher than the priority value of the road resource allocation entity 400 for the road resource. The method further comprises storing 440 information related to the grant for the road resource within a storage unit associated with the road resource allocation entity 400.

Fig. 2b shows a block diagram of an embodiment of a corresponding apparatus 40 for the road resource allocation entity 400. The apparatus 40 comprises at least one interface 42 for communicating with the road resource user 100. The apparatus 40 further comprises a control module 44 configured to receive a request for a road resource from the road resource user 100. The request for the road resource is based on a priority value of the road resource user 100 for the road resource. The control module 44 is configured to determine a priority value of the road resource allocation entity 400 for the road resource. The control module 44 is configured to grant the request for the road resource, if the priority value of the road resource user 100 for the road resource is higher than the priority value of the road resource allocation entity 400 for the road resource. The control module 44 is configured to store information related to the grant for the road resource within a storage unit 46 associated with the road resource allocation entity 400. In various embodiments, as further shown in Fig. 2b, the apparatus 40 may comprise the storage unit 46. If not specified otherwise, the control module 44 may be configured to perform the method of Fig. 2a. Fig. 2b further shows the road resource allocation entity 400 comprising the apparatus 40.

In at least some embodiments, the request for the road resource received 410 from the road resource user 100 may correspond to or may be implemented similar to the request for the road resource transmitted 122 by the road resource user 100 of Figs. 1a and 1b.

In various examples, the priority value of the road resource allocation entity 400 for the road resource may be determined 420 individually for each road resource user. For example, the priority value of the road resource allocation entity 400 for the road resource may be determined 420 based on a presence of further road resource users in a vicinity of the road resource user 100 or based on a traffic flow of a segment of a road associated with the road resource allocation entity 400. In at least some embodiments, the priority value may be determined 420 based on the priority value of the road resource user 100 for the road resource. For example, the road resource allocation entity 400 may receive the priority value of the road resource user 100 within the (reservation) request for the road resource, and may decide based on the received priority value, if it is high enough. If it is high enough, the road resource allocation entity 400 may determine 420 the priority value for the road resource to match the priority value of the road resource user 100 for the road resource. Alternatively, the determining 420 may comprise determining, how valuable it is for the road resource allocation entity 400 to leave the road resource unreserved, e.g. based on traffic flow considerations or based on noise considerations. In various examples, the (reservation) request of the road resource user 100 for the road resource may be granted 420 if the priority value of the road resource user 100 indicates, that it is more valuable to the road resource user 100 to use the road resource than it is to the road resource allocation entity 400 to leave the road resource unreserved.

In at least some embodiments, the method further comprises transmitting the priority value of the road resource allocation entity 400 for the road resource to the road resource user 100. For example, the method may comprise periodically broadcasting the priority value of the road resource allocation entity 400 for the road resource, e.g. using a (direct or cellular) vehicular communication protocol. Alternatively, the method may comprise transmitting the priority value of the road resource allocation entity 400 for the road resource to the road resource user 100 in response to the (reservation) request of the road resource user 100.

In at least some embodiments, the method may comprise negotiating the reservation for the road resource for the road resource user 100 based on the received 420 request for the road resource and based on the information related to a priority value of the road resource allocation entity 400 for the road resource.

In various embodiments, the granting 430 of the request for the road resource may comprise transmitting an indication to the road resource user 100, that the reservation for the road resource for the road resource user 100 is/was successful. Alternatively, the granting 430 of the request for the road resource may comprise transmitting a broadcast that the road resource is reserved by the road resource user 100. For example, the grant for the road resource may be based on a blockchain data structure. The granting 430 of the request for the road resource may comprise transmitting at least a part of the blockchain data structure comprising information related to the reservation for the road resource user 100 for the road structure.

In at least some embodiments, the storage unit associated with the road resource allocation entity 400 comprises a priority value reservoir. The storing 440 of the information related to the grant may comprise adding the priority value (e.g. an amount of tokens corresponding to the priority value) of the road resource user 100 for the road resource to the priority value reservoir. Additionally or alternatively, the storing of the information related to the grant may comprise transferring the priority value (e.g. the amount of tokens) of the road resource user for the road resource from the road resource user 100 to the priority value reservoir of the road resource allocation entity 400. In some examples, the priority value of the road resource user 100 may correspond to an amount of tokens. Granting 430 the request for the road resource may indicate, that the amount of tokens corresponding to the priority value is to be transferred (or has been transferred) by the road resource user 100 to the road resource allocation entity 400, and the amount of tokens may be added to a priority value reservoir of the storage unit of the road resource allocation entity 400 to store 440 the information related to the grant. In a basic example, the information related to the grant may correspond to the priority value of the road resource user 100 or to the amount of tokens. In case the storage unit is managed by a central entity, the storing 440 of the information related to the grant may comprise transmitting the information related to the grant to a central entity and receiving an acknowledgement for the storing of the information related to the grant by the central entity.

In at least some embodiments, a road resource is either associated with a road resource allocation entity or not associated with a road resource allocation entity. A road resource may be associated with a road resource allocation entity, if a road resource allocation entity at least initially grants a reservation for the road resource. The method may further comprise, if the road resource allocation entity 400 receives a survey signal related to the road resource (asking, whether the road resource is associated with a road resource allocation entity), responding to the survey signal with an indication, that the road resource is associated with the road resource allocation entity 400. Alternatively or additionally, the method may comprise periodically broadcasting the indication, that the road resource is associated with the road resource allocation entity.

Embodiments may provide a broker at complex transport situations. At least some embodiments are based on Connectivity, V2X and/or Charging.

In the world of connected vehicles, the information about the desired path or lane on the road, e.g. at complex intersections, might be exchanged among road resource users. This may enable new dimension of path and trajectory planning, which may be based on the constant information exchange about the desired path and preferences among all involved road resource users.

In at least some systems, the path selection may be based on the observed traffic and participant's behavior. For the long-time strategic planning, statistics may play an important role. For the short time trajectory and path planning, the involved road resource users may usually exchange information about the desired trajectory. For example, one vehicle may observe the current road situation, then build its own desired path and then inform other participants about it. Such exchange may be done in a so-called "reactive" manner, i.e. first observe the road conditions and limitations and then build the own plan based on it. This might not be sufficiently adaptive to various constantly changing factors, which may impact the optimality of the selected decision. Such factors may be of objective and subjective nature, which may make it even more complex to conduct a proper negotiation and selection and execution phase. Furthermore, in at least some embodiments, it may be important to check for or guarantee authenticity, integrity and non-repudiation of the exchanged information.

At least some systems for coordinating road planning and distributed value negotiations may attempt to provide both distributed negotiation mechanisms of the road cost function as well as methods to control the correctness of the advertised road action plan.

At least some approaches might not include the information how the current selected path or trajectory is actually important for the given road resource user, since the "importance" might be driven besides objective also by subjective constraints. For example, two vehicles may be assumed: vehicle vA has a goal to achieve a destination with minimum fuel consumption and can tolerate some time-of-arrival variations and does not have any preferences for the path or lane used to reach the destination; and vehicle vB, which serves as a taxi, has to bring its passenger as soon as possible and values the "best" path to the destination the most. Moreover, if the taxi cannot reach the destination in the required time, the price for the longer time might be irrelevant.

In at least some embodiments, vehicles may build, negotiate and trade the cost value (e.g. the priority value), i.e. "price", for each parameter that may be relevant for the vehicle on the road. Such "price" (priority value) may be a constantly varying parameter, which may depend on both objective and subjective factors, similarly as it may be done in current trading systems. As an example, the market price for oil or real estate can significantly change within minutes just because of some news announcement, which might have nothing to do with the relevant industry but influences the subjective preferences of the involved traders. Similarly, applying this to at least some embodiments, the price (priority value) of the road segment (e.g. the road resource) might become dynamically significantly higher at rush hours and decrease at night.

In order to properly handle the trading process and avoid possible "price inflation", at least some embodiments may apply the rules similar to the real marker, e.g.:
- (All) road resource users may be divided into users and "owners" of the certain road-relevant parameter or property (e.g. of a road resource). Where the owner might be a constant owner (e.g. the road resource allocation entity 400), e.g. the government which owns select road segment or a temporal owner (e.g. the road resource user 100 or the second road resource user 200). In the latter case, the temporal owner may be a user that received certain road-relevant service for a temporal use, e.g. booked parking lot for the limited time.
- Additionally, a limited number of tokens (corresponding to property values) may be assigned for road resource users (road resource users) based on the rules defined by the owner of the road-relevant parameters/properties and based on the common transport regulation rules. Then the tokens may be traded for some price among road resource users to earn extra tokens - if the parameters/properties they own are not relevant at the moment and hence can be offered to others. Similarly, to enable the required driving maneuver, extra tokens may be acquired through the "price" negotiation from others, e.g. by transferring a reservation for a road resource.

At least some embodiments may be based on the idea that vehicles rank internally their cost (e.g. the priority value) for the desired path, trajectory, time-of-arrival, the utilized energy and comfort and trade it among each other by the means of V2X (Vehicle-to-X) and C-V2X (Cellular V2X) communications in order to get the most desired road conditions. I.e. propose to consider each road segment of interest as a multidimensional resource, where the values of each dimension (i.e. "price") are the matter of subjective and objective parameters, which may be changed arbitrary (e.g. by the road owner) or via cooperative negotiation among road partners.

At least some embodiments may be applied in a direct manner, i.e. ad-hoc or with the help of the centralized server (e.g. the road resource allocation entity 400) that controls/own the road (coordinated). The first scenario may be relevant for the free-of-charge roads, whereas the second may be suitable for the toll-enabled roads. The main difference in the case of toll-enabled roads may be that in this situation each road and driving parameter (such as recommended velocity, distance between vehicles, etc.) might have pre-defined resource usage cost, set by the road owner. Additionally, in this case, there might be, besides ego-optimal solutions also requirements to fulfill the global optima or characterized by the set of constraints, defined by the road owner.

In the following, an ad hoc approach is illustrated. Some vehicle vA (e.g. the first vehicle 100) may calculate a trajectory and other relevant road parameters for each road segment in a generic manner (as it is done in other systems, e.g. via distributed-ledger technology (e.g. a blockchain)). If a trajectory is found, the vehicle may book it and set the (priority value) value of this booked trajectory for the road segment (region around the vehicle), e.g. the road resource, which this vehicle may influence while driving. Then the vehicle may broadcast the booked trajectory and the price (in aforementioned terms) to others, repeating it periodically or upon request.

Another vehicle vB (e.g. the third road resource user 300) which wants to plan its own path, may receive the information about the current status of the road segments (booked or not and the price). If vehicle vB then wants to travel the trajectory that is already booked, it may send the "rebooking" requests (e.g. the further request related to the road resource) with the new offered "price" (priority value). With the "offered price", vehicle vB informs vA (directly or through the road resource allocation function) to re-plan its planned trajectory such that vB can achieve its desired driving conditions or to offer even higher "price" for it.

Then the negotiation process may start between two vehicles, which may result either in finding a new value for the booked road segment that is acceptable (i.e. the cost of required resources is within the acceptable level) for all involved partners or (i.e. if the cost of required resources exceeds the acceptable level) a "reject rebooking" is sent. In this case, the parameters, which define the impact of one vehicle on the ability of other vehicle to reach its planned destination, may be included in the negotiation messages.

In the following, an approach with a centralized road owner is illustrated. In the case if some third-party entity controls the road, the booking of the road segment may also include sending booking requests to the road operator. Additionally, different road segments might have different pre-defined set of "prices" which may be characterized by the predefined "price properties". For the road operation, the overall road throughput and safety might also be relevant. In this case, the value of the road segment might have different properties and the negotiation message may include different information.

Such approaches may improve certain situations, such as "green light wave", "intersection without traffic lights", might allow more freedom for pedestrians and vulnerable road resource users to cross the street etc., may eliminate the need in having dedicated lanes for the public transportation.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

**List of reference signs**
- 10: Apparatus for a road resource user
- 12: At least one interface
- 14: Control module
- 16: Storage unit
- 40: Apparatus for a road resource allocation entity
- 42: At least one interface
- 44: Control module
- 46: Storage unit
- 100: Road resource user
- 110: Determining a priority value of a road resource user for the road resource
- 112: Receiving information related to a priority value of a second road resource user for the road resource
- 120: Reserving a/the road resource
- 122: Transmitting a request for the road resource
- 124: Receiving a grant for the road resource
- 126: Storing information related to the grant for the road resource
- 128a: Subtracting the priority value from a priority value reservoir
- 128b: Transferring the priority value to a second road resource user or to a road resource allocation entity
- 130: Asserting the road resource
- 140: Transferring the reservation for the road resource
- 142: Receiving a further request for the road resource
- 144: Granting the further request for the road resource
- 146: Storing information related to the further request
- 148a: Adding the priority value of a third road resource user to a priority value reservoir
- 148b: Transferring the priority value of a third road resource user to a priority value reservoir
- 200: Second road resource user
- 300: Third road resource user
- 400: Road resource allocation entity
- 410: Receiving a request for a road resource
- 420: Determining a priority value
- 430: Granting the request for the road resource
- 440: Storing information related to the grant

## Claims

1. A method for a first road resource user (100) comprising:
reserving (120) a road resource by:
transmitting (122) a request for the road resource to a second road resource user (200) or to a road resource allocation entity (400),
receiving (124) a grant for the road resource from the second road resource user (200) or from the road resource allocation entity (400), and
storing (126) information related to the grant for the road resource within a storage unit associated with the first road resource user (100).

2. The method according to claim 1, the method further comprising determining (110) a priority value of the first road resource user (100) for the road resource, wherein the request for the road resource is based on the priority value of the first road resource user (100) for the road resource.

3. The method according to claim 2, wherein the method further comprises receiving (112) information related to a priority value of the second road resource user (200) or of the road resource allocation entity (400) for the road resource from the second road resource user (200) or from the road resource allocation entity (400).

4. The method according to claim 3, wherein the request for the road resource is transmitted (122) to the second road resource user (200) or to the road resource allocation entity (400) if the priority value of the first road resource user (100) for the road resource is higher than the priority value currently associated with the road resource.

5. The method according to one of the claims 2 to 4, wherein the grant for the road resource is received (124) from the second road resource user (200) or from the road resource allocation entity (400) if the priority value of the first road resource user (100) for the road resource is higher than a priority value of the second road resource user (200) or has been selected as the highest priority value by the road resource allocation entity (400) for the road resource.

6. The method according to one of the claims 2 to 5, wherein the storage unit associated with the first road resource user (100) comprises a priority value reservoir,
wherein the priority value of the first road resource user (100) is limited by the priority value reservoir.

7. The method according to one of the previous claims, wherein the first road resource user (100) reserves (120) the road resource by asserting (130) the road resource if the road resource is previously unreserved.

8. The method according to one of the previous claims, wherein the method further comprises:
transferring (140) the reservation for the road resource to a third road resource user (300) by:
receiving (142) a further request for the road resource from the third road resource user (300),
granting (144) the further request for the road resource based on the further request for the road resource, and
storing (146) information related to the further request within the storage unit associated with the first road resource user (100).

9. The method according to claim 8, wherein the further request for the road resource comprises information related to a priority value of the third road resource user (300) for the road resource, wherein the further request is granted (144) if the priority value of the third road resource user (300) for the road resource is higher than a priority value of the first road resource user (100) for the road resource.

10. The method according to claim 9, wherein the storage unit associated with the first road resource user (100) comprises a priority value reservoir, wherein the storing (146) of the information related to the further request comprises transferring (148b) the priority value of the third road resource user (300) for the road resource from the third road resource user (300) to the priority value reservoir of the first road resource user (100).

11. The method according to one of the previous claims, wherein the road resource comprises at least one element of the group of a passage on a segment of a road at a time interval, a passage on a segment of a fast lane at a time interval, an extended amount of space on a road, an extended amount of time for passing a traffic light, a priority in traffic, a usage of a parking spot at a time interval and a consent to overtake.

12. A method for a road resource allocation entity (400), the method comprising:
receiving (410) a request for a road resource from a road resource user (100), wherein the request for the road resource is based on a priority value of the road resource user (100) for the road resource;
determining (420) a priority value of the road resource allocation entity (400) for the road resource;
granting (430) the request for the road resource, if the priority value of the road resource user (100) for the road resource is higher than the priority value of the road resource allocation entity (400) for the road resource; and
storing (440) information related to the grant for the road resource within a storage unit associated with the road resource allocation entity (400).

13. A computer program having a program code for performing at least one of the methods according to one of the previous claims, when the computer program is executed on a computer, a processor, or a programmable hardware component.

14. An apparatus (10) for a first road resource user (100), the apparatus (10) comprising:
at least one interface (12) for communicating with further road resource users and/or with road resource allocation entities; and
a control module (14) configured to:
reserve a road resource by transmitting a request for the road resource to a second road resource user or to a road resource allocation entity, receiving a grant for the road resource from the second road resource user (200) or from the road resource allocation entity (400), and storing information related to the grant for the road resource within a storage unit associated with the first road resource user (100).

15. An apparatus (40) for a road resource allocation entity (400), the apparatus (40) comprising:
at least one interface (42) for communicating with a road resource user (100); and a control module configured to:
receive a request for a road resource from the road resource user (100), wherein the request for the road resource is based on a priority value of the road resource user (100) for the road resource,
determine a priority value of the road resource allocation entity (400) for the road resource,
grant the request for the road resource, if the priority value of the road resource user (100) for the road resource is higher than the priority value of the road resource allocation entity (400) for the road resource, and
store information related to the grant for the road resource within a storage unit associated with the road resource allocation entity (400).
